# EUROPEAN PATENT SPECIFICATION

(11) **EP 3 998 199 B1**
(45) Date of publication and mention of the grant of the patent: **26.07.2023**
(21) Application number: 21158038.6
(22) Date of filing: 19.02.2021
(51) Int. Cl.: B64C 13/34, B64C 13/32, B64C 13/50, B64C 9/08, B64C 29/00, F16H 49/00, B64C 9/16, B64C 11/00, B64D 27/24

(54) **CIVIL AIRCRAFT EQUIPPED WITH ACTUATOR FOR PRIMARY FLIGHT CONTROL SURFACE**
ZIVILFLUGZEUG AUSGESTATTET MIT AKTUATOR FÜR PRIMÄRE FLUGSTEUERFLÄCHE
AÉRONEF CIVIL ÉQUIPÉ D'UN ACTIONNEUR POUR SURFACE DE CONTRÔLE DE VOL PRIMAIRE

(43) Date of publication of application: 18.05.2022
(73) Proprietor: Lilium eAircraft GmbH, 82234 Wessling (DE)
(72) Inventor: WURDAK, Philipp, 80799 München (DE)
(74) Representative: Grünecker Patent- und Rechtsanwälte PartG mbB

(56) References cited:
- EP-A1- 3 279 512
- EP-A1- 3 726 096
- EP-A1- 3 741 667
- EP-A2- 3 312 475
- WO-A2-2020/188604
- US-A1- 2016 229 525
- US-A1- 2018 015 999

## Description

The present invention relates to a civil aircraft equipped with an actuator for generating an actuating movement for a primary flight control surface, in the form of a pivotable flap (aileron) on the trailing edge of a fixed wing, in particular an electrified aircraft with vertical takeoff and landing (VTOL) capability.

Aircraft have a variety of flight control surfaces. These are divided into primary and secondary flight control surfaces. In a conventional aircraft, the primary control surfaces are the elevators, rudders and ailerons. They can be used to influence the attitude of the aircraft. The secondary control surfaces, on the other hand, include the high-lift systems consisting of end flaps and slats as well as the airbrakes for reducing lift and speed. In addition, there are trim devices such as the trimmable horizontal stabilizer. Here, the angle of attack of the entire horizontal stabilizer is adjusted to achieve lower fuel consumption in cruise flight.

Since the functions of the flight control surfaces are essential for safe flight, they are designed with multiple redundancies. For example, the aileron and rudder are divided into different sections and thus actuators to operate them. Each section in a conventional aircraft is supplied by one or two of the three independent hydraulic systems. The primary flight control surfaces as well as the airbrakes must respond quickly, and relatively small aerodynamic loads act in return. The high-lift systems and trim devices, on the other hand, move very slowly. Very large aerodynamic loads act. Additional gears, such as threaded spindles, are often used here.

However, lower fuel consumption is extremely important for civil aviation due to ecological and economic goals. Therefore, conventionally hydraulically or pneumatically operated aircraft systems have been replaced by electrically operated systems for decades. This trend is also referred to as "More Electric Aircraft (MEA)". In previous studies, MEA architectures were more efficient but significantly heavier than the conventional architectures.

In the MEA, hydraulic actuators are replaced by electro-hydrostatic actuators (EHAs) as well as electromechanical actuators (EMAs). EHAs and EMAs enable a significant reduction in system mass, improve energy efficiency, and can thus reduce the energy consumption of an MEA to a considerable extent. With EHAs, a local hydraulic system is operated to supply the actuator. This means that a central hydraulic system is no longer required. In contrast to the central hydraulic system, pressure is only generated when there is a demand. The amount of energy drawn from the engine can thus be greatly reduced, since the actuators are only used for a very short time. EMAs consist primarily of an electric motor and a gearbox to form a motor-gearbox unit. Ball screws are frequently used to convert a rotational drive motion into a translational actuating motion of a slide.

For safety reasons, however, EMAs are not currently used for motion control of primary flight control surfaces (required to control an aircraft safely during flight), since the failure case "blockage" of the ball screw and motor in particular has not yet been adequately solved. EMAs for fly-by-wire/power-by-wire applications in aerospace have therefore so far been used exclusively for secondary flight control surfaces or in unmanned aerial vehicles (UAV) (especially for military purposes). There, EMAs usually consist of the well-known planetary gearboxes established in aviation in combination with an electric motor of any design. Planetary gears are technically complex reduction gears that reduce the high speed of the electric motor and transmit high drive torque to a drive shaft, which in turn drives the secondary flight control surface. These conventional EMA concepts for secondary flight control surfaces have already been and are being implemented by major Tier-1 aerospace suppliers. For example, they arrived in the Airbus A380 as an option for the high-lift systems as well as for the tailplane trim.

However, there is an extremely urgent need for EMAs to be usable in the future also for the purpose of generating an actuating motion for a primary flight control surface, in order to be able to fully exploit their striking advantages there as well in terms of higher energy efficiency, lower maintenance requirements, and increased reliability, durability, and survival probability due to the elimination of conventional hydraulic and pneumatic networks.

US 2018/0015999 A1 relates to an electromechanical hinge-line rotary actuator for use with a thin-wing aircraft in flight-control applications. It provides an electromechanical rotary actuator including a drive member, a motor disposed inside and directly coupled to the drive member, a ground arm, and an output arm. The motor has a rotor configured toward an outside of the motor and directly coupled to an input of the drive member and a stator configured toward an inside of the motor and positioned inside the rotor. The ground arm has an extension member that extends into and is fixedly attached to the stator. The output arm is operatively connected to the ground arm and is pivotable responsive to rotation of the drive member. The output arm defines an opening having a harmonic circular spline that engages the drive member.

According to the invention, this need is met for the first time by providing a civil aircraft as defined in appended claim 1, comprising an actuator for generating an actuating movement for a primary flight control surface, which comprises an electric motor and a reduction gear coupled thereto, this reduction gear being configured as a harmonic drive gear.

The first use of a harmonic drive gear (also known as a strain wave gearing) in combination with a lightweight, high-power electric motor (in particular a permanent magnet synchronous motor, PSM) provides a high-torque, low-backlash, electromechanical actuator (EMA) for actuating a primary flight control surface of a civil aircraft in a single, extremely compactly designed unit.

The invention is directed to a civil aircraft, particularly an electrified vertical takeoff and landing (VTOL) aircraft, comprising an aforementioned actuator.

The high value of the invention lies mainly in the reduction of the number of parts (for example, compared to a commonly used planetary gear) of the actuator for actuating the primary flight control surface, which is accompanied by a significant saving in weight and in required installation space, and which, in turn, brings considerable economic and environmental benefits, especially in civil aircraft, due to the resulting reduction in energy consumption.

The actuator is used in the civil aircraft according to the invention as a flap actuator for adjusting a flap structure pivotable about a pivot axis at a trailing end (downstream of a leading end) of a wing structure.

By configuring the reduction gear as a harmonic drive gear (strain wave gearing) and coupling it to a powerful, lightweight electric motor, the weight of the flap actuator is reduced as far as possible on the one hand, and on the other hand the high performance requirements placed on such a flap actuator (in particular with regard to its holding torque, speed and acceleration) are also met.

Such a flap actuator, designed as a compact actuator unit, advantageously offers the possibility of being incorporated into the flap structure of the civil aircraft to be moved. This further improves the mechanical stiffness of the flap structure so that no flutter tendency can be detected even under high aerodynamic loads.

In this case, the static part of the actuator (in particular the electric motor and the housing comprising the outer ring of the harmonic drive gear) is fixed in the flap structure, while the output shaft of the harmonic drive gear is non-rotatably connected to the wing structure or a wing bracket fixed to the wing structure. The relative rotation between the output shaft and the static part of the actuator then results in the desired pivoting movement of the flap structure about a pivot axis which coincides with the longitudinal axis of the output shaft.

However, as an alternative connection architecture for installing the actuator in the civil aircraft, which is not within the scope of the present invention, a static part (in particular the motor and gear housing) of the actuator is fixedly connected to the trailing edge of the wing structure (either directly or via at least one wing bracket), while the rotating output shaft of the actuator is fixedly connected to the flap structure.

Once again, the use of harmonic drive gear technology in the field of primary flight control applications in the civil aerospace industry, should be emphasized.

Although harmonic drive gear technology (or strain wave gear technology) was originally conceived by NASA for space applications (for example, to deploy solar panels for satellites), said technology is now used primarily in industrial manufacturing applications, particularly in collaborative lightweight robotics. Compared to conventional planetary gears, harmonic drive gears require less than half the weight to transmit a given torque, which is why they can be used advantageously for flight control, especially in commercial aircraft, where a reduction in weight directly contributes to a reduction in energy and resource consumption, and thus to a significant competitive advantage.

In addition, the backlash of harmonic drive gears is extremely low. The elastically deformable races of this gear almost completely compensate for backlash. This represents an additional significant advantage for positioning applications, such as here for reproducible, highly accurate positioning of the primary flight control surface of a civil aircraft for the purpose of attitude control.

In particular, the actuator is used with a civil aircraft according to the invention in which at least one electrically-driven propeller is carried by the flap structure to generate a thrust force. Thus, the actuating motion provided by the actuator causes not only a pivoting motion of the flap structure for aerodynamic flight control, but also a pivoting motion of the thrust axis of the electrically-driven propeller. This opens up the possibility for thrust vector control, which is particularly needed in VTOL aircraft for the transition between a vertical flight mode (in the takeoff and landing phase) and a horizontal flight (cruise) mode.

The actuator according to the invention thus advantageously fulfills a dual function. On the one hand, it counteracts the thrust of the electrically-driven propeller(s) installed in the flap structure, thereby keeping the flap structure in position at all times. On the other hand, it controls in a highly precise manner the angular position of the flap structure acting as the primary flight control surface, thus controlling the aircraft in flight. This dual function requires an unusually high holding torque compared to conventional flap actuators for aircraft of similar size. In addition, the number of flap structures, particularly in electrified VTOL aircraft such as those being tested by the applicant, is large compared to conventional aircraft, leading to the challenge of dramatically increasing the torque density of the actuators and thus reducing the weight of the actuators. However, these challenges are all convincingly overcome by the actuator proposed by the present invention.

Further advantages and features of the invention will be apparent from the following description of a preferred embodiment. The figures show:
- Fig. 1: a longitudinal section through the wing structure and the flap structure coupled thereto of an electric aircraft equipped with the actuator according to the invention; and
- Fig. 2: a longitudinal section along the line A-A of Fig. 1 through an actuator according to the invention (omitting the surrounding aircraft structural components).

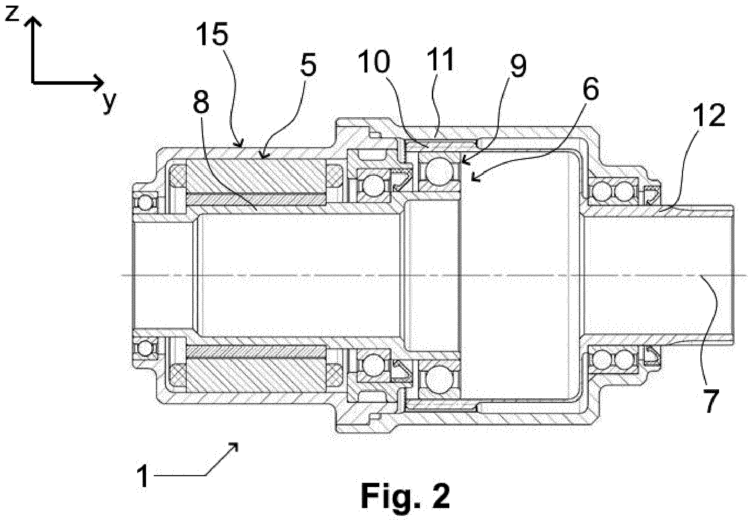

The embodiment shown forms part of a battery or fuel cell electric small aircraft, which can be used in particular in the field of passenger transport as a so-called "air cab". Here, a plurality of small electrically-driven ducted propellers 4 are each carried by a flap structure 2, which is pivotally mounted at the trailing end of the wing structure 3. The small aircraft takes off and lands vertically, but for cruise flight the flap structures 2 and thus the propellers 4 mounted therein are pivoted back to the horizontal position shown in Fig. 2. Then the aircraft uses the lift from the fuselage and wings and can fly much faster than, for example, a helicopter or quadcopter, neither of which uses fixed wings.

At a trailing edge of the wing structure 3, one end of a wing bracket 13 is fixedly connected to the wing structure 3. Another end of this wing bracket 13 is provided with a bore in which a portion of an output shaft 12 of an actuator 1 according to the invention is non-rotatably received. This actuator 1 is, however, except for the aforementioned portion of the output shaft 12, accommodated in the flap structure 2 to be moved itself. In this case, the static part 15 of the actuator 1 (i.e., in particular the electric motor 5 and the surrounding motor and gear housing) is firmly connected to the flap structure 2.

In this context, it is again particularly emphasized that the gear housing of the actuator 1, in which an internally toothed gear, an externally toothed gear, and a wave generator 9 of the harmonic drive gear 6 are incorporated, is also static in relation to the flap structure 2 and is actually the part which is connected to the flap structure 2. Since the torque at the motor side (gear input) is way smaller than the output torque because of the high ratio of this type of gear, it is preferable to react the gear output torque via the gear housing and not via the motor housing. The connection to the flap structure 2 should be as close as possible in the y-direction (see Fig. 2) to the circular spline teeth formed on the interior of the outer ring 11, which can itself serve as part of the gear housing (see Fig. 2) or be firmly attached to the gear housing, in order keep the high torque load path as short as possible in a material- and weight-saving manner.

The relative rotational movement provided by the actuator 1 between the output shaft 12, which is fixedly connected to the wing structure 13, and the static part 15 of the actuator 1, which is fixedly connected to the flap structure 2, thus has the effect of pivoting the flap structure 2 relative to the wing structure 3 about the longitudinal axis of the output shaft 12. Without the need for an additional downstream gear stage, the longitudinal axis of the output shaft 12 thereby forms the pivot axis 7 of the flap structure 2. As a result, the flap structure 2 can therefore be pivoted over a wide angular range of about -20° to 110° in a clockwise direction relative to the wing structure 2, thereby bringing about the desired control of the aircraft's flight attitude.

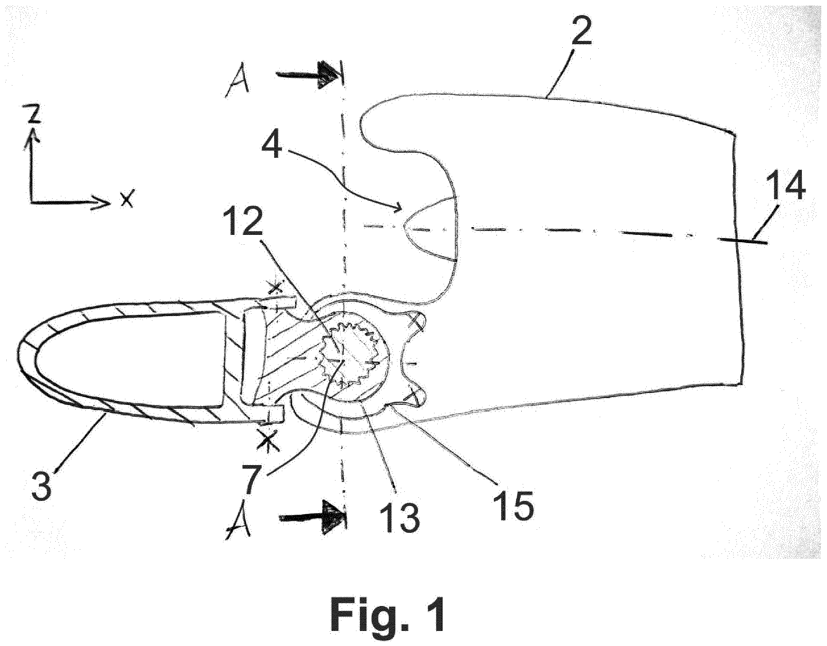

However, the actuating movement generated by the actuator 1 is not only used for aerodynamic flight control. Indeed, it can be seen from Fig. 1 that an electrically-driven ducted propeller 4 is integrated into the flap structure 2 for thrust generation. Thus, the pivoting movement of the flap structure 2 effected by the actuator 1 as explained above can also accomplish a specific alignment of the thrust axis 14 of the propeller 4. In this way, thrust vector control is made possible, which is particularly essential in a VTOL aircraft. Here, during vertical takeoff, the aircraft is carried by the vertically downward directed thrust of the propellers 4. For horizontal flight, however, the propellers 4 are pivoted to the appropriate horizontal position (as shown in Fig. 2) to provide propulsion to the aircraft, so that lift is then generated in a conventional manner by the wing structure 3.

The internal structure of the actuator 1 used is shown in Fig. 2, which consists of a longitudinal sectional view of the actuator 1 along the line A-A in Fig. 1. Accordingly, the longitudinal axis of the output shaft 12 of the actuator 1 coincides with the pivot axis 7 of the flap structure 2 extending in the transverse direction of the aircraft (y-direction), so that it is advantageously possible to dispense with additional downstream gear components (such as conventional recirculating ball screws, for example) for converting the rotary output motion into a linear actuating motion. Instead, the rotary motion of the output shaft 12 of the actuator 1 is converted directly and without loss into the pivoting motion of the flap structure 2.

According to Fig. 2, the actuator 1 has as internal components an electric motor 5 (for example, in the form of a PSM), which rotates an input shaft 8 arranged coaxially with the output shaft 12. This input shaft 8 is coupled to a harmonic drive gear 6 acting as a reduction gear to reduce the high speed of the electric motor 5 to the necessary working speeds while increasing the torque. In detail, the harmonic drive gear 6 comprises a so-called wave generator 9, which consists of an elliptical steel disk connected to the input shaft 8 in a rotationally fixed manner, and of a ball bearing shrunk onto the outside of the steel disk and a thin deformable race.

The driven elliptical disc deforms a thin-walled steel bush 10 via the outer ring of the ball bearing. As a result, a fine outer toothing of the steel bush 10 in the region of the major elliptical axis engages with a fine inner toothing of an outer ring 11. Since the outer ring 11 is part of the housing of the actuator 1 that is fixed in the flap structure 2, when the driven steel disc of the wave generator 9 rotates, the steel bush 10 that is fixed to the output shaft 12 in terms of rotation is left behind in accordance with the smaller number of teeth compared with the outer ring 11.

Due to the high number of teeth of the fine toothings, very large reduction ratios are advantageously obtained with the harmonic drive gear 6. Since the elliptical disc of the wave generator 9 is acting as the input and the steel bush 10 as the output, the reduction ratio, purely by way of example, with n = 300 teeth for the inner toothing of the outer ring 11 and n = 298 teeth for the outer toothing of the steel bush 10 is 298: 2 = 149, i.e. for 149 revolutions of the elliptical disc the deformable steel bush 10 rotates once.

The harmonic drive gear 6 is characterized by its torsional rigidity and freedom from backlash. This freedom from backlash of the harmonic drive gear 6 makes it possible to provide positioning movements with repeat accuracies in the range of a few angular seconds. This enables positioning operations in the µm range. This is particularly essential in the motion control of the flap structure 2 with integrated propeller 4 shown in Fig. 1, because it allows not only high-precision aerodynamic flight control but also high-precision thrust vector control.

The high torque capacity as well as the low mass moment of inertia of the harmonic drive gear 6 also enable extremely high accelerations. This, in turn, enables extremely fast pivoting movements of the flap structure 2 to ensure a fast dynamic response of the aerodynamic flight control and thrust vector control at all times in adaptation to changing flight conditions.

The flap structure 2 itself is statically and dynamically stable, with the critical flutter parameters being the tip weight and stiffness of the flap actuator 1. If none of the parameters were present, the damping would still be adequate within the normal operating range of the aircraft. Practical investigations have shown that the stiffness or spring rate of the actuator 1 according to the invention is identical to those of conventional hydraulic and pneumatic units.

Despite all this, harmonic drive gears 6 have so far been used only for axle drives in robots (especially in the field of human-robot collaborations), drives in flight simulators, tracking of large parabolic antennas, in motor vehicles (dynamic steering), in machine tools and in drives of printing machines. However, the use of harmonic drive gears 6 in actuators 1 for actuating primary flight control surfaces 2, makes it possible to fully exploit the fundamental advantages inherent in this type of gear (high torque, high acceleration and virtually zero backlash with low weight and small installation space requirements) also in civil aviation. In particular, the aspect of weight reduction has always occupied a significant space in civil aviation and predestines the use of the actuator 1 according to the invention precisely in this area.

It is true that in the manufacture of harmonic drive gears 6 the production technology (number of machining steps) and the material processing are more complex compared to the manufacture of conventional planetary gears, so that the total cost for the gears in both cases is approximately in the same range. However, it is expected that due to the new areas of application for actuators 1 with harmonic drive gears 6 opened up by the present invention, among others, the manufacturing costs could be reduced due to the economies of scale, so that an economic added value can also be achieved with the present invention in the foreseeable future.

### List of reference signs

- 1: actuator (flap actuator)
- 2: primary flight control surface (flap structure)
- 3: wing structure
- 4: electrically-driven propeller
- 5: electric motor
- 6: harmonic drive gear (reduction gear)
- 7: pivot axis
- 8: input shaft
- 9: wave generator
- 10: steel bush
- 11: outer ring
- 12: output shaft
- 13: wing bracket
- 14: thrust axis
- 15: static part of the actuator

## Claims

1. A civil aircraft, in particular electrified vertical take-off and landing aircraft, comprising at least one actuator (1) for generating an actuating movement for a primary flight control surface (2), wherein the actuator (1) comprises an electric motor (5) and a reduction gear (6) coupled thereto, and wherein the reduction gear (6) is configured as a harmonic drive gear comprising a wave generator (9),
wherein the actuator (1) is configured as a flap actuator for adjusting a flap structure (2) pivotable about a pivot axis (7) at a trailing edge of a wing structure (3), wherein the actuator (1) comprises an outer ring (11) with an inner toothing and which is part of a housing of the actuator (1) that is fixed in the flap structure (2), and wherein an output shaft (12) of the actuator (1) is disposed coaxially with the pivot axis (7) of the flap structure (2),
**characterized in that**
the actuator (1) further comprises an input shaft (8) rotated by the electric motor (5) and arranged coaxially with the output shaft (12);
and **in that** the wave generator (9) consists of:
an elliptical steel disk connected to the input shaft (8) in a rotationally fixed manner;
a ball bearing shrunk onto the outside of the steel disk; and
a steel bush (10) with an outer toothing which engages with the inner toothing of the outer ring, said steel bush (10) being deformable by the steel disk via an outer ring of the ball bearing and being fixed to the output shaft (12).

2. The civil aircraft according to claim 1, wherein the flap actuator (1) is incorporated into the flap structure (2) to be adjusted.

3. The civil aircraft according to claim 1, wherein the electric motor (5) and the housing of the actuator (1) are fixedly connected to the flap structure (2) and the relatively rotating output shaft (12) of the actuator (1) is fixedly connected to a wing bracket (13), and wherein this wing bracket (13) is in turn fixed to the trailing edge of the wing structure (3).

4. The civil aircraft according to claim 1, wherein the flap structure (2) carries at least one electrically-driven propeller (4) for generating thrust, and thrust vector control for the aircraft is additionally provided by means of the actuating movement generated by the actuator (1).

## Patentansprüche

1. Ziviles Flugzeug, insbesondere elektrisch betriebenes senkrechtstartendes Flugzeug, das wenigstens ein Stellglied (1) zum Erzeugen einer Stellbewegung für eine primäre Flug-Steuerfläche (2) umfasst, wobei das Stellglied(1) einen Elektromotor (5) sowie ein damit gekoppeltes Untersetzungsgetriebe (6) umfasst, und wobei das Untersetzungsgetriebe (6) als ein Harmonic-Drive-Getriebe ausgeführt ist, das einen Wellengenerator (9) umfasst, das Stellglied (1) als ein Klappen-Stellglied zum Verstellen einer Klappen-Struktur (2) ausgebildet ist, die um eine Schwenkachse (7) an einer Hinterkante einer Flügel-Struktur (3) geschwenkt werden kann, das Stellglied (1) einen Außenring (11) mit einer Innenverzahnung umfasst, der Teil eines Gehäuses des Stellgliedes (1) ist, das in der Klappen-Struktur (2) befestigt ist, und wobei
eine Abtriebswelle (12) des Stellgliedes (1) koaxial zu der Schwenkachse (7) der Klappen-Struktur (2) angeordnet ist,
**dadurch gekennzeichnet, dass**
das Stellglied (1) des Weiteren eine Antriebswelle (8) umfasst, die durch den Elektromotor (5) gedreht wird und koaxial zu der Abtriebswelle (12) angeordnet ist;
und **dadurch, dass** der Wellengenerator (9) besteht aus:
einer elliptischen Stahlscheibe, die drehfest mit der Antriebswelle (8) verbunden ist;
einem Kugellager, das auf die Außenseite der Stahlscheibe aufgeschrumpft ist; sowie
einer Stahlbuchse (10) mit einer Außenverzahnung, die mit der Innenverzahnung des Außenrings in Eingriff ist, wobei die Stahlbuchse (10) durch die Stahlscheibe über einen Außenring des Kugellagers verformt werden kann und an der Abtriebswelle (12) befestigt ist.

2. Ziviles Flugzeug nach Anspruch 1, wobei das Klappen-Stellglied (1) in die zu verstellende Klappen-Struktur (2) integriert ist.

3. Ziviles Flugzeug nach Anspruch 1, wobei der Elektromotor (5) und das Gehäuse des Stellgliedes (1) fest mit der Klappen-Struktur (2) verbunden sind und die relativ rotierende Abtriebswelle (12) des Stellgliedes (1) fest mit einer Flügel-Halterung (wing bracket) (13) verbunden ist, und wobei diese Flügel-Halterung (13) ihrerseits an der Hinterkante der Flügel-Struktur (3) befestigt ist.

4. Ziviles Flugzeug nach Anspruch 1, wobei die Klappen-Struktur (2) wenigstens einen elektrisch angetriebenen Propeller (4) zum Erzeugen von Schub trägt, und Schubvektorsteuerung für das Flugzeug zusätzlich mittels der von dem Stellglied (1) erzeugten Stellbewegung erfolgt.

## Revendications

1. Aéronef civil, en particulier avion électrifié à décollage et atterrissage verticaux, comprenant au moins un actionneur (1) pour générer un mouvement d'actionnement pour une surface de contrôle de vol primaire (2), dans lequel l'actionneur (1) comprend un moteur électrique (5) et un réducteur (6) couplé à celui-ci, et dans lequel le réducteur (6) est configuré comme un engrenage d'entraînement harmonique comprenant un générateur d'ondes (9),
dans lequel l'actionneur (1) est configuré comme un actionneur de volet pour ajuster une structure de volet (2) pivotant autour d'un axe de pivot (7) à un bord de fuite d'une structure d'aile (3), dans lequel l'actionneur (1) comprend une bague extérieure (11) avec une denture intérieure et qui fait partie d'un boîtier de l'actionneur (1) qui est fixé dans la structure de volet (2), et dans lequel
un arbre de sortie (12) de l'actionneur (1) est disposé coaxialement à l'axe de pivotement (7) de la structure du volet (2),
**caractérisé par le fait que**
l'actionneur (1) comprend en outre un arbre d'entrée (8) entraîné en rotation par le moteur électrique (5) et disposé coaxialement avec l'arbre de sortie (12);
et en ce que le générateur d'ondes (9) consiste en :
un disque elliptique en acier relié à l'arbre d'entrée (8) de manière fixe en rotation ;
un roulement à billes fretté à l'extérieur du disque d'acier ; et
une douille en acier (10) avec une denture extérieure qui s'engage dans la denture intérieure de la bague extérieure, ladite douille en acier (10) étant déformable par le disque en acier via une bague extérieure du roulement à billes et étant fixée à l'arbre de sortie (12).

2. Aéronef civil selon la revendication 1, dans lequel l'actionneur de volet (1) est incorporé dans la structure de volet (2) à régler.

3. Aéronef civil selon la revendication 1, dans lequel le moteur électrique (5) et le boîtier de l'actionneur (1) sont reliés de manière fixe à la structure de volet (2) et l'arbre de sortie (12) relativement rotatif de l'actionneur (1) est relié de manière fixe à un support d'aile (13), et dans lequel ce support d'aile (13) est à son tour fixé au bord de fuite de la structure d'aile (3).

4. Aéronef civil selon la revendication 1, dans lequel la structure de volet (2) porte au moins une hélice à entraînement électrique (4) pour générer la poussée, et le contrôle du vecteur de poussée de l'aéronef est également assuré au moyen du mouvement d'actionnement généré par l'actionneur (1).
